# EUROPÄISCHE PATENTSCHRIFT

(11) **EP 3 556 449 B1**
(45) Veröffentlichungstag und Bekanntmachung des Hinweises auf die Patenterteilung: **17.03.2021**
(21) Anmeldenummer: 19169400.9
(22) Anmeldetag: 16.04.2019
(51) Int. Cl.: B01D 36/00, B01D 29/11, B01D 29/25, B01D 29/27, B01D 29/58, C10G 33/06

(54) **FILTERELEMENT, KOALESZENZABSCHEIDER UND VERFAHREN ZU DEREN HERSTELLUNG SOWIE DEREN VERWENDUNG**
FILTER ELEMENT, COALESCENCE SEPARATOR AND METHOD FOR THEIR PREPARATION AND THEIR USE
ÉLÉMENT FILTRANT, SÉPARATEUR À COALESCENCE ET SON PROCÉDÉ DE FABRICATION AINSI QUE SON UTILISATION

(30) Priorität: 16.04.2018 DE 102018108986
(43) Veröffentlichungstag der Anmeldung: 23.10.2019
(73) Patentinhaber: FAUDI Aviation GmbH, 35260 Stadtallendorf (DE)
(72) Erfinder: LAUBER, Uwe, 35096 Weimar (DE)
(74) Vertreter: Patentanwälte Olbricht Buchhold Keulertz

(56) Entgegenhaltungen:
- EP-A1- 0 308 098
- DE-B- 1 113 783
- US-A- 4 058 463
- US-A- 5 015 376
- US-A- 5 755 962
- US-A- 5 938 921
- US-A1- 2014 311 963

## Beschreibung

Die Erfindung betrifft ein Filterelement für einen Koaleszenzabscheider gemäß dem Oberbegriff von Anspruch 1, einen Koaleszenzabscheider gemäß Anspruch 7 ein Verfahren zur Herstellung eines Filterelements nach Anspruch 9, sowie eine Herstellvorrichtung zur Durchführung des Verfahrens gemäß Anspruch 10

Koaleszenzabscheider dienen dazu, ein Medium aus einem zu reinigenden Medium abzuscheiden. Hierzu weisen sie als Filterelement ein Material auf, das für das abzuscheidende Medium schwerer durchdringbar ist als für das zu reinigende Medium. Auf diese Weise bilden sich innerhalb des Filterelements größer werdende Tropfen des abzuscheidenden Mediums, die sobald sie die Austrittsseite des Filterelements erreichen aufgrund ihrer Größe und einem Dichteunterschied zum zu reinigenden Medium absinken oder aufsteigen und in einem vorgesehenen Sammelraum sammelbar sind. Dieser Sammelraum kann dann entleert werden. So ist beispielsweise aus DE 38 18 595 A1 bekannt, dass sich ein Koaleszenzabscheider dadurch herstellen lässt, dass ein gelochtes Stützrohr bzw. gelochter Stützkörper einen Wickelkern für Glasfasermatten unterschiedlicher Porosität bzw. glasfaserverstärkte Polyamidmatten ausbildet, sodass die mehrlagig auf das gelochte Stützrohr aufgewickelten Matten ein Filterelement ausbildet. Das Stützrohr wird dann an seinen Enden mit einer ersten Endscheibe, die einen Zulauf ausbildet und einer abdichtenden zweiten Endscheibe verschlossen. Eingesetzt wird der Koaleszenzabscheider nunmehr dazu, freies Wasser aufweisenden Kohlenwasserstoff durch den Zulauf in das Stützrohr einzuleiten und von innen nach außen durch das Filterelement zu befördern. Hierbei wird das freie Wasser zurückgehalten und bildet Tropfen, die, sobald sie an der Außenfläche des Filterelements angelangen, nach unten ablaufen. Ein ähnliches Umwickeln eines Stützkerns mit einem mattenförmigen Glasfasermaterial zur Ausbildung eines Filterelements bzw. Koaleszenzabscheiders wird auch in DE 21 26 080 C3 und DE 11 13 783 B beschrieben.

Andere relevante Dokumente sind US4058463, US5015376, EP0308098 und US2014/311963.

Nachteilhaft an diesen Ausgestaltungen ist, dass der Wickelprozess teure Maschinen erfordert, weil die Porosität des Filterelements von der Kompression der Wicklung abhängt. Auch sind die Fertigungsstückzahlen auf den Wickelmaschinen gering, weil das Wickeln zeitintensiv ist. Dies macht den Koaleszenzabscheider teuer in der Herstellung. Schließlich lässt sich das durch Wicklung hergestellte Filterelement nicht durch einen Anwender ersetzen. Nicht einmal eine einfache Trennung der Materialien zum Zwecke des Recyclings gelingt. Letzteres unter anderem auch deshalb, weil die aufgewickelten Matten mit umweltschädlichen Phenolharzen behandelt werden um diese hydrophil zu machen.

Aufgabe der Erfindung ist es daher, die Nachteile des Standes der Technik zu überwinden und eine Lösung bereitzustellen, die zu einem kostengünstigen, einfach herstellbaren und umweltfreundlichen Koaleszenzabscheider führt, der zudem gut gewartet und entsorgt werden kann.

Hauptmerkmale der Erfindung sind im kennzeichnenden Teil von Anspruch 1 sowie den Ansprüchen 7, 9, 10, 11 und 12 angegeben. Ausgestaltungen sind Gegenstand der Ansprüche 2 bis 6 und 8

Die Erfindung betrifft ein Filterelement für einen Koaleszenzabscheider, mit oder bestehend aus einem Filterschichtsystem, das wenigstens eine erste Filterschichtlage aus einem Vliesmaterial aufweist, wobei das Filterschichtsystem als Filterstrumpf ausgebildet ist, der die Form eines länglichen Hohlkörpers aufweist.

Vorteilhaft an einem so ausgestalteten Filterelement ist, dass die Herstellung einfach ist, weil sie keine Wickelmaschine erfordert. Die Filterelemente lassen sich separat von Stützkörpern herstellen und lagern. Das filterstrumpfartige Filterelement ist optional austauschbar, vorzugsweise zerstörungsfrei durch Aufziehen auf und Abziehen von einem Stützkörper. Dies eröffnet einen Ersatzteil und Servicemarkt für Filterelemente und Koaleszenzabscheider. Zudem ist das Filterteil einfach recycelbar. Alternativ kann das filterstrumpfartige Filterelement aber auch fest versiegelt auf dem Stützkörper sitzen. Hierdurch kann kein Fluid im Randbereich durch das Filterelement hindurchtreten, ohne gefiltert zu werden.

In einer speziellen Ausführungsform weist der Filterstrumpf zwei längsseitige Enden auf, die offen ausgebildet sind. Hierdurch lässt sich der Filterstrumpf an einem Ende auf einen Stützkörper aufschieben, während ein Montagekern aus Richtung des anderen Endes in das Filterelement ragt. Dies ermöglicht eine einfache Montage, indem der Filterstrumpf von dem Montagekern auf das Stützrohr schiebbar ist. Optional kann ein hohler Montagekern eingesetzt werden, der zunächst mit dem Filterstrumpf über den Stützkörper geschoben wird. Durch Herausziehen des Montagekerns setzt sich der Filterstrumpf dann auf den Stützkörper.

Außerdem hat der Filterstrumpf vorzugsweise eine Länge, die wenigstens dem Dreifachen, weiter bevorzugt wenigstens dem Vierfachen und besonders bevorzugt wenigstens dem Fünffachen des Durchmessers des Filterstrumpfes entspricht. Hierdurch resultiert eine schlanke Bauform.

Der Filterstrumpf sollte eine hohlzylindrische Form aufweisen. Damit lässt er sich formschlüssig auf eine zylindrische Außenwand eines Stützkörpers aufziehen.

Der Filterstrumpf sollte insbesondere in Umfangsrichtung eine Elastizität, insbesondere Dehnungselastizität, aufweisen. Das erleichtert das Aufziehen auf einen Stützkörper. Im Zusammenspiel mit dem später beschriebenen optionalen Stützkörper bietet es sich an, wenn der Filterstrumpf im unbelasteten Zustand einen Innendurchmesser aufweist, der geringer oder gleich dem Außendurchmesser des Stützkörpers ist, und im elastisch gedehnten Zustand einen Innendurchmesser erreichen kann, der größer als der Außendurchmesser des Stützkörpers ist. Damit sitzt der Filterstrumpf formschlüssig auf dem Stützkörper. Gleichzeitig lässt er sich durch Dehnen im Rahmen seiner Elastizität auf dem Stützkörper montieren.

Des Weiteren ist es zu bevorzugen, wenn der Filterstrumpf formschlaff ist. Das ähnelt gewissermaßen einem Bekleidungsstrumpf und hat den Vorteil, dass bei Montage und Lagerung keine Schäden wie beispielsweise an Faltenelementen entstehen können. Im Gegensatz zu einem formschlaffen Filterstrumpf haben Faltenelemente nämlich eine strukturelle Eigenstabilität, die gegen Knicken und Falten empfindlich ist.

Der Filterstrumpf mit einer Längsnaht ausgebildet, welche das Filterschichtsystem in Umfangsrichtung verbindet. Damit lassen sich beispielsweise vorgefertigte Vliesmatten nutzen, sodass auf einfache Weise Filterstrümpfe mit unterschiedlichen Durchmessern herstellbar sind. Vorzugsweise ist die Längsnaht eine Schweißnaht. Damit enthält das Filterelement keine Fremdstoffe wie beispielsweise Phenolharze und ist gut recycelbar. Bevorzugt weist die Längsnaht nach außen, dies insbesondere dadurch, dass das Filterschichtsystem zwei Umfangsenden aufweist, die nach außen weisend miteinander verbunden sind. Das erlaubt ein einfaches und präzises Verbinden bei einfach zusammengefalteter Vliesmatte. Des Weiteren ist eine lineare Längsnaht, insbesondere parallel zur Achse des Filterstrumpfes, zu bevorzugen. Diese ist besonders einfach herstellbar.

In einer abweichenden Variante ist das Vlies spiralförmig um den Stützkörper gewickelt und an den Stoßstellen miteinander verschweißt. Vorteilhaft hieran ist, dass sich hierdurch in einem kontinuierlichen Prozess eine endlose Hülle herstellen lässt.

Das Filterschichtsystem weist wenigstens eine zweite Filterschichtlage aus einem Vliesmaterial auf wobei die zweite Filterschichtlage benachbart auf der ersten Filterschichtlage angeordnet ist. Durch den mehrstufigen Aufbau des Filterschichtsystems kann der Koaleszenzeffekt gesteigert werden. Hierzu sollte das Vliesmaterial der zweiten Filterschichtlage von dem Vliesmaterial der ersten Filterschichtlage abweichen. Insbesondere sollte die zweite Filterschichtlage eine Porosität aufweisen, die von einer Porosität der ersten Filterschichtlage abweicht. Durch einen Aufbau mit wenigstens einer zweiten Filterschichtlage ist es fertigungstechnisch relativ einfach möglich, je nach Spezifikationsanforderung an das Filterschichtsystem unterschiedliche Vliesmaterialien miteinander zu kombinieren, um die Spezifikation zu erfüllen. Es müssen einige wenige unterschiedliche Vliesmaterialien bereitstehen, was genügt, um eine Vielzahl unterschiedlicher Filtersysteme zur Erfüllung der gewünschten Spezifikation zu erfüllen.

Die Längsnaht verbindet alle Filterschichtlagen des Filterschichtsystems gemeinsam. Damit ist nur eine Verbindung herzustellen, und die Vliesmaterialien können zunächst aufeinandergestapelt, dann umgeschlagen und anschließend verbunden werden.

Mit Ausnahme der Längsnaht sollten die Filterschichtlagen zumindest im Wesentlichen oder vollständig lose aufeinanderliegen. Damit sind keine Verbindungstechniken notwendig, insbesondere auch keine Phenolharze oder den Filterbereich verkleinernde Verbindungen.

Eine kostengünstige Herstellung und Vorratshaltung gelingt insbesondere bei einer Variante, bei der wenigstens eine der Filterschichtlagen endlos hergestellt ist, und bevorzugt alle der Filterschichtlagen endlos hergestellt sind.

Für das Abscheiden von freiem Wasser aus einem anderen Fluid, insbesondere einem Fluid, dass auf einem Kohlenwasserstoff basiert, sollte wenigstens eine der Filterschichtlagen hydrophob sein.

Das Abscheiden von Wasser lässt sich zudem dadurch unterstützen, dass wenigstens eine der Filterschichtlagen hydrophil ist.

Bei einer Ausführungsform ist vorgesehen, dass die Filterschichtlagen jeweils eine Porosität aufweisen, wobei die Porosität der Filterschichtlagen von innen nach außen abnimmt. Dies unterstützt die Koaleszenz.

Besonders umweltfreundlich ist eine Variante, bei der das Filterelement phenolharzfrei hergestellt ist.

Die Erfindung betrifft außerdem einen Koaleszenzabscheider mit einem Filterelement, wie es vor- und nachstehend beschrieben ist, und mit einem Zulauf, der in einen Stützkörper mit Austrittsöffnungen mündet, wobei das Filterelement auf den Stützkörper aufgezogen ist, insbesondere derart, dass es in Strömungsrichtung hinter den Austrittsöffnungen angeordnet ist. Der Vorteil eines solchen Koaleszenzabscheiders liegt darin, dass die Herstellung einfach ist, weil keine Wickelmaschine für die Fertigung des Filterelements erforderlich ist. Das Filterelement kann optional austauschbar durch Aufziehen auf und Abziehen vom Stützkörper ausgebildet sein. Dies eröffnet einen Ersatzteil und Servicemarkt. Hierdurch ist der Koaleszenzabscheider auch einfach recycelbar. Alternativ kann das filterstrumpfartige Filterelement aber auch fest versiegelt auf dem Stützkörper sitzen. Hierdurch kann kein Fluid im Randbereich durch das Filterelement hindurchtreten, ohne gefiltert zu werden. Die Versiegelung kann beispielsweise im Bereich der nachstehend angegebenen optionalen Endscheiben ausgebildet sein.

Der Stützkörper sollte rohrförmig ausgebildet sein, wobei der Zulauf an einem ersten Ende und/oder einem zweiten Ende des rohrförmigen Stützkörpers angeordnet ist, und wobei die Austrittsöffnungen in einer Mantelfläche des rohrförmigen Stützkörpers ausgebildet sind. Im Besonderen kann es sich bei dem Stützkörper um einen, gelochten, perforierten oder einen porösen Rohrkörper handeln. Vorzugsweise ist der Stützkörper hohlzylindrisch. Außerdem hat der Stützkörper vorzugsweise eine Länge, die wenigstens dem Dreifachen, weiter bevorzugt wenigstens dem Vierfachen und besonders bevorzugt wenigstens dem Fünffachen des Durchmessers des Stützkörpers entspricht. Hierdurch resultiert eine schlanke Bauform. Es können entsprechend zahlreiche Koaleszensabscheider in kleinem Bauraum benachbart zueinander angeordnet werden. hieraus resultiert eine hohe Filteroberfläche auf kleinem Bauraum.

Preiswert und umweltfreundlich ist eine nähere Ausgestaltung, gemäß der die erste Filterschichtlage zumindest im Wesentlichen oder vollständig lose auf dem Stützkörper sitzt.

Des Weiteren sollte das als Filterstrumpf ausgebildete Filterschichtsystem im Bereich des ersten und zweiten Endes fluiddicht relativ zum rohrförmigen Stützkörper abgedichtet sein. Hierdurch muss das gesamte Fluid durch das Filterelement hindurchtreten, um den Koaleszenzabscheider zu verlassen.

Bevorzugt sind wenigstens zwei der Filterschichtlagen gleichzeitig auf den Stützkörper aufgezogen. Hierdurch ist der Endmontageaufwand des Aufziehens gering.

Vorzugsweise ist der Zulauf in einer ersten Endscheibe ausgebildet, die den rohrförmigen Stützkörper am ersten Ende verschließt (im Besonderen mit Ausnahme des Zulaufs). Hierdurch kann die erste Endscheibe separat hergestellt und nach dem Aufziehen des Filterelements auf den Stützkörper angebracht werden. Zudem sollte der rohrförmige Stützkörper am zweiten Ende mit einer zweiten Endscheibe verschlossen sein. Diese zweite Endscheibe kann einen Zulauf aufweisen oder aber fluiddicht ausgeführt sein.

Zur Vermeidung von einer Verschmutzung des Filterelements, was die Koaleszenz beeinträchtigt, kann optional ein Vorfilterelement in dem Stützkörper angeordnet sein, z.B. ein Faltteil bzw. ein Faltenfilter. Ein Faltteil bildet eine besonders große Oberfläche für die Vorfiltration aus. Außerdem kann das Vorfilterelement das Tropfenspektrum positiv beeinflussen, sodass die Koaleszenz des Filterelements gesteigert wird.

Für den Einsatz auf dem Gebiet der Koaleszenz von Wasser aus Kohlenwasserstoffen oder der Koaleszenz von Kohlenwasserstoffen aus Wasser bietet sich eine Ausgestaltung an, bei der das Filterelement einen Außendurchmesser aufweist, der zwischen 1 Zoll und 8 Zoll liegt, und im Besonderen 2 Zoll, 4 Zoll oder 6 Zoll beträgt.

Außerdem kann der Koaleszenzabscheider optional eine Schutzhülle aufweisen, welche das Filterelement umgibt. Die Schutzhülle ist vorzugsweise ein hydrophiles Textil, und besonders bevorzugt ein hydrophiler Baumwollstrumpf. Die Hydrophilie unterstützt ein Ablaufen von großen Tropfen des abzuscheidenden Fluids. Ein Baumwollstrumpf ist dabei besonders kostengünstig.

Die Schutzhülle sollte eine hohlzylindrische Form aufweisen. Damit lässt sie sich formschlüssig auf eine zylindrische Außenwand eines Filterelements aufziehen.

Die Schutzhülle sollte insbesondere in Umfangsrichtung eine Elastizität, insbesondere Dehnungselastizität, aufweisen. Das erleichtert das Aufziehen auf einen Stützkörper. Des Weiteren sollte die Schutzhülle im unbelasteten Zustand einen Innendurchmesser aufweist, der geringer oder gleich dem Außendurchmesser des Filterelements ist, und im elastisch gedehnten Zustand einen Innendurchmesser erreichen kann, der größer als der Außendurchmesser des Filterelements ist. Damit sitzt die Schutzhülle formschlüssig auf dem Stützkörper. Gleichzeitig lässt sie sich durch Dehnen im Rahmen ihrer Elastizität auf dem Filterelement montieren.

Des Weiteren ist es zu bevorzugen, wenn die Schutzhülle formschlaff ist. Das ähnelt gewissermaßen einem Bekleidungsstrumpf und hat den Vorteil, dass bei Montage und Lagerung keine Schäden wie beispielsweise an Faltenelementen entstehen können.

Fernerhin betrifft die Erfindung eine Abscheideeinrichtung mit einem Koaleszenzabscheider, wie er vor- und nachstehend beschrieben ist, mit einem Filtergehäuse, in dem der Koaleszenzabscheider angeordnet ist, wobei ein Gehäusezulauf (insbesondere des Filtergehäuses) in den Zulauf des Koaleszenzabscheiders mündet, wobei ein Sammelvolumen unterhalb von dem Koaleszenzabscheider in dem Filtergehäuse ausgebildet ist, und wobei ein Gehäuseablauf (insbesondere des Filtergehäuses) oberhalb des Sammelvolumens aus dem Filtergehäuse ausmündet. Durch die Austrittsöffnungen und das Filterelement austretendes Fluid gelangt so in das Innere des Filtergehäuses. Aufgrund des vorteilhaften Filterelements ist auch die Abscheideeinrichtung besonders einfach und kostengünstig herstellbar sowie umweltfreundlich. Je nachdem, ob das abgeschiedene Fluid schwerer oder leichter als das andere Fluid ist, wird das Gehäuse derart ausgerichtet montiert, dass das Sammelvolumen geodätisch untenliegend oder obliegend angeordnet ist.

Bevorzugt ist wenigstens ein zweiter Koaleszenzabscheider, wie er vor- und nachstehend beschrieben ist, in dem Filtergehäuse angeordnet, wobei der Gehäusezulauf in die Zuläufe der Koaleszenzabscheider mündet, und wobei das Sammelvolumen unterhalb von den Koaleszenzabscheidern in dem Filtergehäuse ausgebildet ist. Aufgrund der erhöhten Anzahl an Koaleszenzabscheidern lässt sich eine große Abscheidefläche in einem kompakten Filtergehäuse erreichen.

Vorzugsweise ist das Sammelvolumen in einem Sammelsumpf des Filtergehäuses ausgebildet. Dieses ist entweder unten oder oben angeordnet, insbesondere in Abhängigkeit davon, ob das abgeschiedene Fluid eine höhere oder eine geringere Dichte aufweist als das andere Fluid. Eine hohe Flüssigkeitssäule des abgeschiedenen Fluids lässt sich nämlich einfacher evakuieren. Hierzu ist im Bereich des tiefsten Punktes des Sammelvolumens vorzugsweise ein Evakuierungsausgang, vorzugsweise mit einem Evakuierungsventil, zum Ablassen von gesammeltem Fluid angeordnet.

Weiterhin betrifft die Erfindung ein Verfahren zur Herstellung eines Filterelements, wie es vor- und nachstehend beschrieben ist, bei dem das Filterschichtsystem in Abhängigkeit von einer angeforderten Filterspezifikation des Filterelements dadurch hergestellt wird, dass wenigstens eine erste und eine zweite Filterschichtlage aus einem Magazin mit unterschiedlichen einzelnen Filterschichtlagen ausgewählt und in einer definierten Reihenfolge übereinander angeordnet werden, vorzugsweise so, dass das Filterschichtsystem als Filterstrumpf ausgebildet wird, der die Form eines länglichen Hohlkörpers aufweist. Vorteilhaft an diesem Verfahren ist, dass keine hohe Lagerhaltung für Filterelemente notwendig ist, sondern das Filterelement kurzfristig aus einem Pool von vorgehaltenen Filterschichtlagen im Magazin konfektioniert werden kann. Das Magazin weist bevorzugt wenigstens drei unterschiedliche Materialien für die einzelnen Filterschichtlagen auf.

Eine besonders effiziente Herstellung des Filterelements gelingt, wenn die unterschiedlichen Materialien für die einzelnen Filterschichtlagen als Rollenmaterial im Magazin gelagert sind. Bevorzugt werden die unterschiedlichen Materialien dann von mehreren Rollen gleichzeitig abgewickelt und in der gewünschten Reihenfolge kontinuierlich aufeinandergelegt bzw. - gezogen. Dabei besteht die Option, die mehreren aufeinanderliegenden Schichten gemeinsam so umzuschlagen, dass die Längskanten in eine gemeinsame Richtung weisen. Sodann ist es möglich, kontinuierlich eine Längsnaht herzustellen, die alle Filterschichten miteinander verbindet, z.B. durch Schweißen. Optional besteht die Möglichkeit, Überstände, die über die Längsnaht hinausragen, kontinuierlich abzutrennen. Verfahrensgemäß bestehen außerdem die Optionen, entweder das Filterschichtsystem erneut aufzuwickeln oder aber direkt entsprechend der Wunschlänge der Filterelemente in Einzelteile zu schneiden.

Des Weiteren betrifft die Erfindung eine Herstellvorrichtung zur Durchführung dieses Verfahrens, die eine Steuereinrichtung, ein Magazin mit wenigstens drei unterschiedlichen einzelnen Filterschichtlagen, eine Entnahmevorrichtung und eine Anordnungsvorrichtung aufweist, wobei die Entnahmevorrichtung derart von der Steuereinrichtung angesteuert ist, dass in Abhängigkeit einer angeforderten Filterspezifikation eines herzustellenden Filterelements wenigstens eine erste und eine zweite Filterschichtlage aus dem Magazin entnehmbar sind, und die Anordnungsvorrichtung derart mit der Steuereinrichtung angesteuert ist, dass die entnommenen Filterschichtlagen in einer definierten Reihenfolge übereinander und zu einem Filterschichtsystem in Form eines Filterstrumpfs anordenbar sind. Mit der Herstellvorrichtung lassen sich somit kurzfristig und automatisiert Filterelemente mit unterschiedlichen Spezifikationen herstellen.

Optional kann die Entnahmevorrichtung eine Abwickelanlage sein, welche die einzelnen Filterschichtlagen von Rollen des Magazins zieht und kontinuierlich aufeinanderlegt.

Vorzugsweise weist die Herstellvorrichtung eine Verbindungseinrichtung auf, mit der eine Naht an den einzelnen oder den übereinanderliegenden Filterschichten herstellbar ist. Damit gelingt ein Verbinden ohne zusätzlichen Maschinenwechsel.

Optional kann die Herstellvorrichtung hinter der Anordnungsvorrichtung eine Umschlagvorrichtung aufweisen, mit der die Filterschichten so umgeschlagen werden, dass die Längskanten in die gleiche Richtung weisen. Für eine hohe Flexibilität bietet sich optional eine Ausgestaltung an, bei der die Umschlagvorrichtung derart umschaltbar ist, dass ein Umschlagen der Filterschichten wahlweise nach Innen oder Außen erfolgt. Damit bleibt man Seitens der Entnahmevorrichtung frei, ob der Schichtaufbau in Normalreihenfolge oder in umgekehrter Reihenfolge erfolgt. Hierdurch ist das Magazin insbesondere bei dem Einsatz von Rollenmaterial flexibler nutzbar.

Außerdem betrifft die Erfindung ein Verfahren zur Herstellung eines Koaleszenzabscheiders, wie er vor- und nachstehend beschrieben ist, wobei das Filterschichtsystem wenigstens eine zweite Filterschichtlage aus einem Vliesmaterial aufweist, wobei die zweite Filterschichtlage benachbart auf der ersten Filterschichtlage angeordnet ist, bei dem wenigstens zwei der Filterschichtlagen gleichzeitig auf den Stützkörper aufgezogen werden. Hierdurch ist das Aufziehen besonders schnell und bei entsprechendem Innendurchmesser auch händisch durchführbar. Außerdem lassen sich die einzelnen Filterschichtlagen vorab einfacher übereinanderziehen und aufeinanderlegen.

Alternativ hierzu betrifft die Erfindung auch ein Verfahren zur Herstellung eines Koaleszenzabscheiders, wie er vor- und nachstehend beschrieben ist, wobei das Filterschichtsystem wenigstens eine zweite Filterschichtlage aus einem Vliesmaterial aufweist, wobei die zweite Filterschichtlage benachbart auf der ersten Filterschichtlage angeordnet ist, bei dem wenigstens zwei der Filterschichtlagen nacheinander auf den Stützkörper aufgezogen werden. Dieses Vorgehen eignet sich insbesondere, wenn auf dem Stützkörper ein Filterelement mit dickerem Filterschichtsystem ausgebildet sein soll, weil sich ein solches im Vergleich zu den Einzelschichten kaum zum Zwecke des Aufziehens dehnen lässt.

Optional wird das filterstrumpfförmige Filterelement an einem Ende auf einen Stützkörper aufschoben, während ein Montagekern aus Richtung des anderen Endes in das Filterelement ragt. Dies ermöglicht eine einfache Montage, indem das Filterelement von dem Montagekern auf das Stützrohr schiebbar ist. Optional kann ein hohler Montagekern eingesetzt werden, der zunächst mit dem Filterstrumpf über den Stützkörper geschoben wird. Durch Herausziehen des Montagekerns setzt sich der Filterstrumpf dann auf den Stützkörper. Vorzugsweise hat der Montagekern einen veränderbaren Durchmesser. Hierdurch lässt sich das Filterelement zunächst einfach auf den Montagekern ziehen und erst anschließender Durchmesser des Montagekerns so erweitern, dass er über den Stützkörper schiebbar ist.

Schließlich betrifft die Erfindung die Verwendung eines Filterelements, wie es vor- und nachstehend beschrieben ist, bei der Durchströmung mit einem Fluid, das auf einem Kohlenwasserstoff basiert, wobei mit dem Filterelement freies Wasser aus dem Fluid abgeschieden wird.

Darüber hinaus betrifft die Erfindung eine Verwendung eines Koaleszenzabscheiders, wie er vor- und nachstehend beschrieben ist, bei der Durchströmung mit einem Fluid, das auf einem Kohlenwasserstoff basiert, wobei mit dem Filterelement freies Wasser aus dem Fluid abgeschieden wird.

Aufgrund des kostengünstigen und auch einfach wieder trennbaren Aufbaus lässt sich ein sicherer Betankungsvorgang, bei geringen Kosten und hoher Umweltverträglichkeit sowohl durch die Verwendung des Filterelements als auch des Koaleszenzabscheiders erreichen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Koaleszenzabscheider mit einem Teilschnitt;
- Fig. 2: einen Längsschnitt durch einen Ausschnitt eines Stützkörpers, eines Filterelements und eines Schutzstrumpfes;
- Fig. 3: einen Querschnitt durch ein Filterelement;
- Fig. 4: eine Explosionsdarstellung eines Koaleszenzabscheiders; und
- Fig. 5: eine weitere Explosionsdarstellung eines Koaleszenzabscheiders.

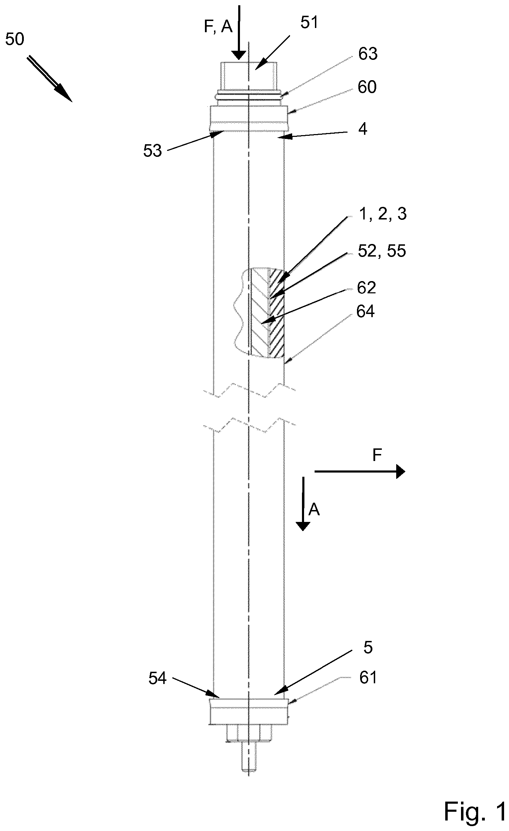

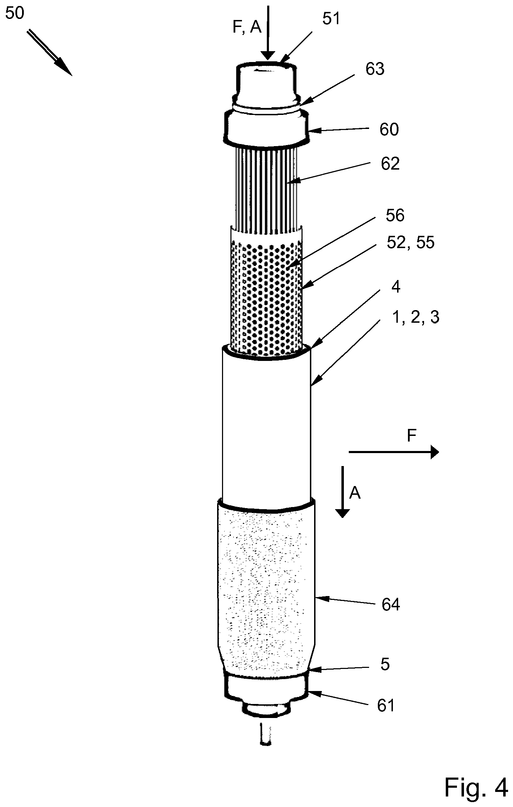

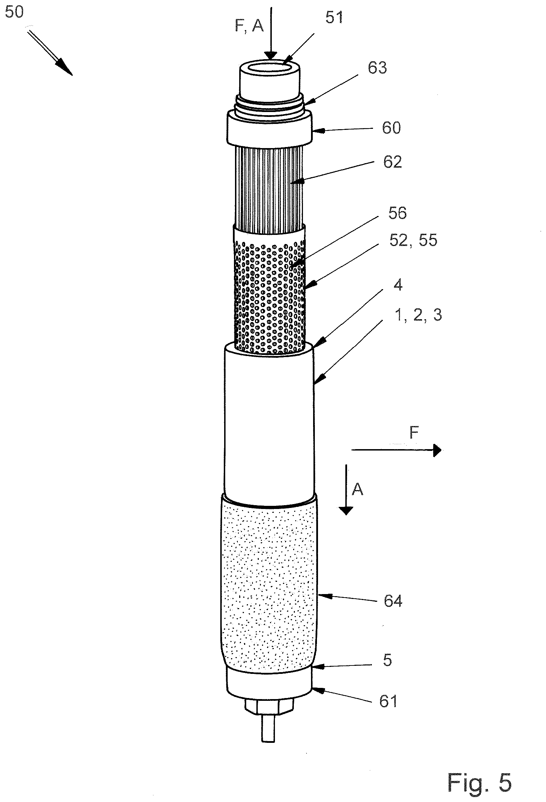

In den **Fig. 1****,** **4** **und** **5** ist jeweils ein Koaleszenzabscheider 50 dargestellt. Der Koaleszenzabscheider 50 der Fig. 4 und 5 ist baugleich, wobei Fig. 4 aus einer elektronischen Ableitung eines Farbbildes resultiert, wohingegen Fig. 5 eine Nachzeichnung des Farbbildes ist. Dabei unterscheiden sich die Koaleszenzabscheider 50 der Fig. 4 und 5 technisch im Wesentlichen durch ihre vertikale Länge vom Koaleszenzabscheider 50 nach Fig. 1.

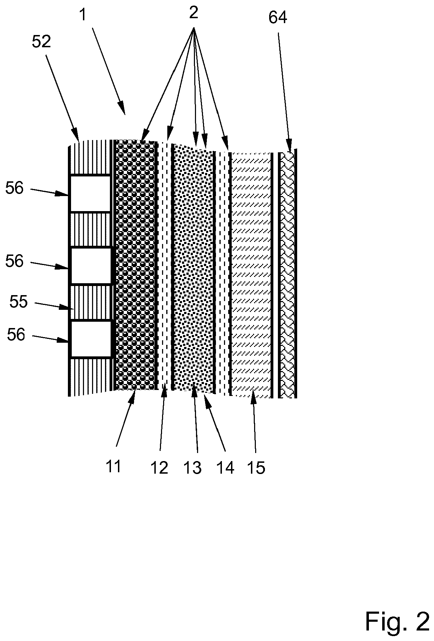

Wie man in den Fig. 1, 4 und 5 erkennen kann, weist der Koaleszenzabscheider 50 einen rohrförmigen Stützkörper 52 auf. Dieser verfügt in seiner perforierten Mantelfläche 55 über Austrittsöffnungen (vgl. Bezugsziffer 56 in Fig. 2). Auf den Stützkörper 52 ist ein Filterelement 1 aufgezogen, das im Wesentlichen lose auf dem Stützkörper 52 sitzt. Das Filterelement 1 ist wiederum von einem Schutzstrumpf 64 umgeben.

Der rohrförmige Stützkörper 52 erstreckt sich von einem ersten Ende 53 zu einem zweiten Ende 54. Über die gleiche Länge erstrecken sich das Filterelement 1 und der Schutzstrumpf 64 auf dem Stützkörper 52. Das als Filterstrumpf 3 ausgebildete Filterschichtsystem 2 des Filterelements 1 ist mit seinen offenen Enden 4, 5 jeweils im Bereich des ersten und zweiten Endes 53, 54 des Stützkörpers 52 fluiddicht relativ zum rohrförmigen Stützkörper 52 abgedichtet. Hierzu ist das erste Ende 53 des Stützkörpers 52 mit einer ersten Endscheibe 60 verschlossen, in der ein Zulauf 51 ausgebildet ist, der ins Innere des Stützkörpers 52 mündet. Auf einem Anschlussstutzen der ersten Endscheibe 60 sitzt ein Dichtring 63, sodass der Koaleszenzabscheider 50 mit diesem Anschlussstutzen dichtend mit einer Zuleitung verbindbar ist.

Am zweiten Ende 54 ist der rohrförmige Stützkörper 52 mit einer zweiten Endscheibe 61 verschlossen. In dem Stützkörper 52 ist zudem ein Vorfilterelement 62 angeordnet, das als Faltteil ausgebildet ist.

Ein potentiell für die Ausgestaltungen nach den Fig. 1, 4 und 5 einsetzbares Filterelement 1 wird näher im Zusammenhang mit **Fig. 2** beschrieben. Hier ist insbesondere ein Längsschnitt durch einen Ausschnitt eines Stützkörpers 52, eines Filterelements 1 und eines Schutzstrumpfes 64 dargestellt.

Das Filterelement 1 besteht aus einem Filterschichtsystem 2, das eine erste Filterschichtlage 11 aus einem Vliesmaterial und vier weitere Filterschichtlagen 12, 13, 14, 15 aus unterschiedlichen Vliesmaterialien aufweist. Es weist die Form eines Filterstrumpfes auf, insbesondere in der Form eines länglichen, und insbesondere hohlzylindrischen sowie schlaffen Hohlkörpers. Die weiteren Filterschichtlagen 12, 13, 14, 15 sind schichtweise von innen nach außen auf der ersten Filterschichtlage 11 angeordnet. Die Filterschichtlagen 11, 12, 13, 14, 15 liegen zumindest im Wesentlichen oder vollständig lose aufeinander. Wenigstens eine der Filterschichtlagen 11, 12, 13, 14, 15 ist hydrophob, und wenigstens eine der Filterschichtlagen 11, 12, 13, 14, 15 ist hydrophil. Vorzugsweise erfolgt die Herstellung der Filterelemente 1 außerdem phenolharzfrei.

Die Filterschichtlagen 11, 12, 13, 14, 15 können jeweils endlos hergestellt sein. Optional ist eine nahtlose Herstellung des Filterstrumpfes 3 möglich, beispielsweise durch schlauchartiges Extrudieren von Vliesmaterial.

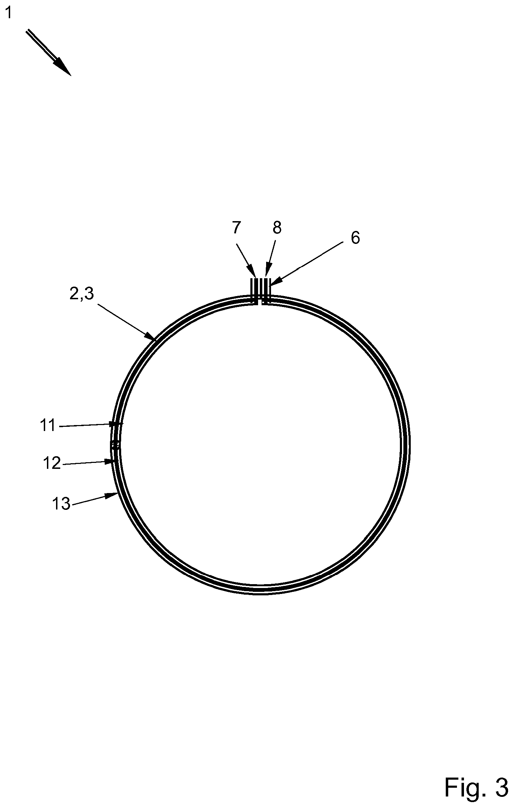

In einer abweichenden Variante gemäß Fig. 3, in der ein Querschnitt durch ein Filterelement 1 dargestellt ist, sind alle Filterschichtlagen 11, 12, 13, 14, 15 des Filterschichtsystems 2 in Umfangsrichtung mit einer gemeinsamen Längsnaht 6 verbunden. Die Längsnaht 6 ist eine nach außen weisende Schweißnaht. Diese ist dadurch hergestellt, dass das Filterschichtsystem 2 zwei Umfangsenden 7, 8 aufweist, die nach außen weisend miteinander verschweißt sind.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Filterelement | 52 | Stützkörper |
| 2 | Filterschichtsystem | | |
| 3 | Filterstrumpf | 53 | erstes Ende |
| 4 | Ende | 54 | zweites Ende |
| 5 | Ende | 55 | Mantelfläche |
| 6 | Längsnaht | 56 | Austrittsöffnungen |
| 7 | Umfangsende | | |
| 8 | Umfangsende | 60 | erste Endscheibe |
| | | 61 | zweite Endscheibe |
| 11 | erste Filterschichtlage | 62 | Vorfilterelement |
| 12 | zweite Filterschichtlage | 63 | Dichtring |
| 13 | Filterschichtlage | 64 | Schutzstrumpf |
| 14 | Filterschichtlage | | |
| 15 | Filterschichtlage | A | ausgeschiedenes Fluid |
| | | F | Fluid |
| 50 | Koaleszenzabscheider | | |
| 51 | Zulauf | | |

## Patentansprüche

1. **Filterelement** (1) für einen Koaleszenzabscheider (50), mit einem Filterschichtsystem (2), das wenigstens eine erste Filterschichtlage (11) aus einem Vliesmaterial aufweist, wobei das Filterschichtsystem (2) als Filterstrumpf (3) ausgebildet ist, der die Form eines länglichen Hohlkörpers aufweist, **dadurch gekennzeichnet, dass** das Filterschichtsystem (2) wenigstens eine zweite Filterschichtlage (12) aus einem Vliesmaterial aufweist, wobei die zweite Filterschichtlage (12) benachbart auf der ersten Filterschichtlage (11) angeordnet ist, wobei der Filterstrumpf (3) mit einer Längsnaht (6) ausgebildet ist, welche wenigstens die erste Filterschichtlage (11) in Umfangsrichtung verbindet, wobei die Längsnaht (6) alle Filterschichtlagen (11, 12) des Filterschichtsystems (2) gemeinsam verbindet.

2. Filterelement (1) nach Anspruch 1, **dadurch gekennzeichnet, dass** der Filterstrumpf (3) zwei längsseitige Enden (4, 5) aufweist, die offen ausgebildet sind.

3. Filterelement (1) nach einem der vorhergehenden Ansprüche, **dadurch gekennzeichnet, dass** wenigstens eine der Filterschichtlagen (11, 12, 13, 14, 15) endlos hergestellt ist.

4. Filterelement (1) nach einem der vorhergehenden Ansprüche, **dadurch gekennzeichnet, dass** wenigstens eine der Filterschichtlagen (11, 12, 13, 14, 15) hydrophob ist.

5. Filterelement (1) nach einem der vorhergehenden Ansprüche, **dadurch gekennzeichnet, dass** wenigstens eine der Filterschichtlagen (11, 12, 13, 14, 15) hydrophil ist.

6. Filterelement (1) nach einem der vorhergehenden Ansprüche, **dadurch gekennzeichnet, dass** die Filterschichtlagen (11, 12, 13, 14, 15) jeweils eine Porosität aufweisen, wobei die Porosität der Filterschichtlagen (11, 12, 13, 14, 15) von innen nach außen abnimmt.

7. **Koaleszenzabscheider** (50) mit einem Filterelement (1) nach einem der Ansprüche 1 bis 6 und einem Zulauf (51), der in einen Stützkörper (52) mit Austrittsöffnungen (56) mündet, wobei das Filterelement (1) auf den Stützkörper (52) aufgezogen ist.

8. Koaleszenzabscheider (50) nach Anspruch 7, **dadurch gekennzeichnet, dass** die erste Filterschichtlage (11) zumindest im Wesentlichen lose auf dem Stützkörper (52) sitzt.

9. **Verfahren zur Herstellung** eines Filterelements (1) für einen Koaleszenzabscheider (50) gemäß Anspruch 1, wobei das Filterelement (1) ein Filterschichtsystem (2) aufweist, das wenigstens eine erste Filterschichtlage (11) aus einem Vliesmaterial aufweist, und wenigstens eine zweite Filterschichtlage (12) aus einem Vliesmaterial aufweist, wobei die zweite Filterschichtlage (12) benachbart auf der ersten Filterschichtlage (11) angeordnet ist, wobei das Filterschichtsystem (2) als Filterstrumpf (3) ausgebildet ist, der die Form eines länglichen Hohlkörpers aufweist, wobei der Filterstrumpf (3) mit einer Längsnaht (6) ausgebildet ist, welche wenigstens die erste Filterschichtlage (11) in Umfangsrichtung verbindet, wobei die Längsnaht (6) alle Filterschichtlagen (11, 12) des Filterschichtsystems (2) gemeinsam verbindet, **dadurch gekennzeichnet, dass** das Filterschichtsystem (2) in Abhängigkeit von einer angeforderten Filterspezifikation des Filterelements (1) dadurch hergestellt wird, dass wenigstens eine erste und eine zweite Filterschichtlage (11, 12) aus einem Magazin mit unterschiedlichen einzelnen Filterschichtlagen (11, 12, 13, 14, 15) ausgewählt und in einer definierten Reihenfolge übereinander angeordnet werden.

10. **Herstellvorrichtung** zur Durchführung des Verfahrens nach Anspruch 9, **dadurch gekennzeichnet, dass** diese eine Steuereinrichtung, ein Magazin mit wenigstens drei unterschiedlichen einzelnen Filterschichtlagen (11, 12, 13, 14, 15), eine Entnahmevorrichtung und eine Anordnungsvorrichtung aufweist, wobei die Entnahmevorrichtung derart von der Steuereinrichtung angesteuert ist, dass in Abhängigkeit einer angeforderten Filterspezifikation eines herzustellenden Filterelements (1) wenigstens eine erste und eine zweite Filterschichtlage (11, 12) aus dem Magazin entnommen werden, und die Anordnungsvorrichtung derart mit der Steuereinrichtung angesteuert ist, dass die entnommenen Filterschichtlagen (11, 12, 13, 14, 15) in einer definierten Reihenfolge übereinander und zu einem Filterschichtsystem (2) in Form eines Filterstrumpfs (3) angeordnet werden.

11. **Verfahren zur Herstellung** eines Koaleszenzabscheiders (50) nach einem der Ansprüche 7 oder 8, der ein Filterelement (1) nach Anspruch 1 aufweist, bei dem wenigstens zwei der Filterschichtlagen (11, 12, 13, 14, 15) gleichzeitig auf den Stützkörper (52) aufgezogen werden, wobei das Filterelement (1) ein Filterschichtsystem (2) aufweist, das wenigstens eine erste Filterschichtlage (11) aus einem Vliesmaterial aufweist, und wenigstens eine zweite Filterschichtlage (12) aus einem Vliesmaterial aufweist, wobei die zweite Filterschichtlage (12) benachbart auf der ersten Filterschichtlage (11) angeordnet ist, wobei das Filterschichtsystem (2) als Filterstrumpf (3) ausgebildet ist, der die Form eines länglichen Hohlkörpers aufweist, wobei der Filterstrumpf (3) mit einer Längsnaht (6) ausgebildet ist, welche wenigstens die erste Filterschichtlage (11) in Umfangsrichtung verbindet, wobei die Längsnaht (6) alle Filterschichtlagen (11, 12) des Filterschichtsystems (2) gemeinsam verbindet.

12. **Verfahren zur Herstellung** eines Koaleszenzabscheiders (50) nach einem der Ansprüche 7 oder 8, der ein Filterelement (1) nach Anspruch 1 aufweist, bei dem wenigstens zwei der Filterschichtlagen (11, 12, 13, 14, 15) nacheinander auf den Stützkörper (52) aufgezogen werden, wobei das Filterelement (1) ein Filterschichtsystem (2) aufweist, das wenigstens eine erste Filterschichtlage (11) aus einem Vliesmaterial aufweist, und wenigstens eine zweite Filterschichtlage (12) aus einem Vliesmaterial aufweist, wobei die zweite Filterschichtlage (12) benachbart auf der ersten Filterschichtlage (11) angeordnet ist, wobei das Filterschichtsystem (2) als Filterstrumpf (3) ausgebildet ist, der die Form eines länglichen Hohlkörpers aufweist, wobei der Filterstrumpf (3) mit einer Längsnaht (6) ausgebildet ist, welche wenigstens die erste Filterschichtlage (11) in Umfangsrichtung verbindet, wobei die Längsnaht (6) alle Filterschichtlagen (11, 12) des Filterschichtsystems (2) gemeinsam verbindet, .

## Claims

1. **Filter element** (1) for a coalescence separator (50), with a filter layer system (2), which has at least one first filter layer (11) made from a fleece material, wherein the filter layer system (2) is designed as a filter sleeve (3), which has the form of an elongated hollow body, **characterised in that** the filter layer system (2) has at least one second filter layer (12) made from a fleece material, wherein the second filter layer (12) is arranged adjacently on the first filter layer (11), wherein the filter sleeve (3) is designed with a longitudinal seam (6), which joins together at least the first filter layer (11) in circumferential direction, wherein the longitudinal seam (6) joins together all filter layers (11, 12) of the filter layer system (2).

2. Filter element (1) according to claim 1, **characterised in that** the filter sleeve (3) has two longitudinal side ends (4, 5), which are designed to be open.

3. Filter element (1) according to any of the preceding claims, **characterised in that** at least one of the filter layers (11, 12, 13, 14, 15) is made to be endless.

4. Filter element (1) according to any of the preceding claims, **characterised in that** at least one of the filter layers (11, 12, 13, 14, 15) is hydrophobic.

5. Filter element (1) according to any of the preceding claims, **characterised in that** at least one of the filter layers (11, 12, 13, 14, 15) is hydrophilic.

6. Filter element (1) according to any of the preceding claims, **characterised in that** the filter layers (11, 12, 13, 14, 15) each have a porosity, wherein the porosity of the filter layers (11, 12, 13, 14, 15) decreases from the inside out.

7. Coalescence separator (50) with a filter element (1) according to any of claims 1 to 6 and an inflow (51) which leads into a support body (52) with outlet openings (56), wherein the filter element (1) is drawn onto the support body (52).

8. Coalescence separator (50) according to claim 7, **characterised in that** the first filter layer (11) lies at least essentially loosely on the support body (52).

9. **Method for the production** of a filter element (1) for a coalescence separator (50) according to claim 1, wherein the filter element (1) has a filter layer system (2) which has at least one first filter layer (11) made from a fleece material, and at least one second filter layer (12) made from a fleece material, wherein the second filter layer (12) is arranged adjacently on the first filter layer (11), wherein the filter layer system (2) is designed as a filter sleeve (3), which has the form of an elongated hollow body, wherein the filter sleeve (3) is designed with a longitudinal seam (6) which joins at least the first filter layer (11) in circumferential direction, wherein the longitudinal seam (6) joins together all of the filter layers (11, 12) of the filter layer system (2), **characterised in that** the filter layer system (2) is produced as a function of a requested filter specification of the filter element (1) **in that** at least one first and one second filter layer (11, 12) are selected from a magazine with different individual filter layers (11, 12, 13, 14, 15) and are arranged on top of one another in a defined sequence.

10. **Production device** for performing the method according to claim 9, **characterised in that** the latter has a control device, a magazine with at least three different individual filter layers (11, 12, 13, 14, 15), a removal device and an arrangement device, wherein the removal device is controlled by the control device, such that as a function of a required filter specification of a filter element (1) to be produced at least one first and one second filter layer (11, 12) are removed from the magazine, and the arrangement device is controlled by the control device such that the removed filter layers (11, 12, 13, 14, 15) are arranged on top of one another in a defined sequence and to a filter layer system (2) in the form of a filter sleeve (3).

11. **Method for the production** of a coalescence separator (50) according to any of claims 7 or 8, which has a filter element (1) according to claim 1, wherein at least two of the filter layers (11, 12, 13, 14, 15) are drawn onto the support body (52) at the same time, wherein the filter element (1) has a filter layer system (2) which has at least one first filter layer (11) made from a fleece material, and at least one second filter layer (12) made from a fleece material, wherein the second filter layer (12) is arranged adjacently on the first filter layer (11), wherein the filter layer system (2) is designed as a filter sleeve (3) which has the form of an elongated hollow body, wherein the filter sleeve (3) is designed with a longitudinal seam (6), which joins at least the first filter layer (11) in circumferential direction, wherein the longitudinal seam (6) joins together all filter layers (11, 12) of the filter layer system (2).

12. **Method for the production** of a coalescence separator (50) according to any of claims 7 or 8, which has a filter element (1) according to claim 1, wherein at least two of the filter layers (11, 12, 13, 14, 15) are drawn one after the other onto the support body (52), wherein the filter element (1) has a filter layer system (2) which has at least one first filter layer (11) made from a fleece material and at least one second filter layer (12) made from a fleece material, wherein the second filter layer (12) is arranged adjacently on the first filter layer (11), wherein the filter layer system (2) is designed as a filter sleeve (3) which has the form of an elongated hollow body, wherein the filter sleeve (3) is designed with a longitudinal seam (6) which joins together at least the first filter layer (11) in circumferential direction, wherein the longitudinal seam (6) joins together all filter layers (11, 12) of the filter layer system (2).

## Revendications

1. **Elément filtrant** (1) pour un séparateur à coalescence (50) doté d'un système de couches filtrantes (2) qui présente au moins une première feuille de couches filtrantes (11) en un matériau non tissé, dans lequel le système de couches filtrantes (2) est réalisé en tant que manchon filtrant (3) présentant la forme d'un corps creux oblong, **caractérisé en ce que** le système de couches filtrantes (2) présente au moins une seconde feuille de couches filtrantes (12) en un matériau non tissé, dans lequel la seconde feuille de couches filtrantes (12) est agencée de manière adjacente sur la première feuille de couches filtrantes (11), dans lequel le manchon filtrant (3) est réalisé avec une couture longitudinale (6) qui relie au moins la première feuille de couches filtrantes (11) dans le sens périphérique, dans lequel la couture longitudinale (6) relie ensemble toutes les feuilles de couches filtrantes (11, 12) du système de couches filtrantes (2).

2. **Elément** filtrant (1) selon la revendication 1, **caractérisé en ce que** le manchon filtrant (3) présente deux extrémités longitudinales (4, 5) qui sont réalisées ouvertes.

3. **Elément** filtrant (1) selon l'une quelconque des revendications précédentes, **caractérisé en ce qu'au** moins une des feuilles de couches filtrantes (11, 12, 13, 14, 15) est fabriquée sans extrémité.

4. **Elément** filtrant (1) selon l'une quelconque des revendications précédentes, **caractérisé en ce qu'au** moins une des feuilles de couches filtrantes (11, 12, 13, 14, 15) est hydrophobe.

5. **Elément** filtrant (1) selon l'une quelconque des revendications précédentes, **caractérisé en ce qu'au** moins une des feuilles de couches filtrantes (11, 12, 13, 14, 15) est hydrophile.

6. **Elément** filtrant (1) selon l'une quelconque des revendications précédentes, **caractérisé en ce que** les feuilles de couches filtrantes (11, 12, 13, 14, 15) présentent respectivement une porosité, la porosité des feuilles de couches filtrantes (11, 12, 13, 14, 15) décroissant de l'intérieur vers l'extérieur.

7. **Séparateur à coalescence** (50) doté d'un élément filtrant (1) selon l'une quelconque des revendications 1 à 6 et d'une amenée (51) qui débouche dans un corps de support (52) avec des orifices de sortie (56), dans lequel l'élément filtrant (1) est posé sur le corps de support (52).

8. Séparateur à coalescence (50) selon la revendication 7, **caractérisé en ce que** la première feuille de couches filtrantes (11) est posée au moins essentiellement librement sur le corps de support (52).

9. **Procédé destiné à la fabrication** d'un élément filtrant (1) pour un séparateur à coalescence (50) selon la revendication 1, dans lequel l'élément filtrant (1) présente un système de couches filtrantes (2) qui présente au moins une première feuille de couches filtrantes (11) en un matériau non tissé, et présente au moins une seconde feuille de couches filtrantes (12) en un matériau non tissé, dans lequel la seconde feuille de couches filtrantes (12) est agencée de manière adjacente sur la première feuille de couches filtrantes (11), dans lequel le système de couches filtrantes (2) est réalisé en tant que manchon filtrant (3) présentant la forme d'un corps creux oblong, dans lequel le manchon filtrant (3) est réalisé avec une couture longitudinale (6) qui relie au moins la première feuille de couches filtrantes (11) dans le sens périphérique, dans lequel la couture longitudinale (6) relie ensemble toutes les feuilles de couches filtrantes (11, 12) du système de couches filtrantes (2), **caractérisé en ce que** le système de couches filtrantes (2) est fabriqué en fonction d'une spécification de filtre demandée de l'élément filtrant (1) de sorte qu'au moins une première et une seconde feuilles de couches filtrantes (11, 12) sont sélectionnées parmi un magasin doté de différentes feuilles de couches filtrantes individuelles (11, 12, 13, 14, 15) et sont superposées dans un ordre défini.

10. **Dispositif de fabrication** pour la réalisation du procédé selon la revendication 9, **caractérisé en ce que** celui-ci présente un appareil de commande, un magasin avec au moins trois feuilles de différentes couches filtrantes individuelles (11, 12, 13, 14, 15), un dispositif de retrait et un dispositif d'agencement, dans lequel le dispositif de retrait est commandé par appareil de commande de manière à ce qu'au moins une première et une seconde feuilles de couches filtrantes (11, 12) puissent être retirées du magasin en fonction d'une spécification de filtre demandée d'un élément filtrant (1) à fabriquer, et le dispositif d'agencement est commandé avec l'appareil de commande de telle sorte que les feuilles de couches filtrantes (11, 12, 13, 14, 15) retirées soient superposées dans un ordre défini et agencées vers un système de couches filtrantes (2) sous la forme d'un manchon filtrant (3).

11. **Procédé destiné à la fabrication** d'un séparateur à coalescence (50) selon l'une quelconque des revendications 7 ou 8, qui présente un élément filtrant (1) selon la revendication 1, dans lequel au moins deux des feuilles de couches filtrantes (11, 12, 13, 14, 15) sont posées simultanément sur le corps de support (52), dans lequel l'élément filtrant (1) présente un système de couches filtrantes (2) qui présente au moins une première feuille de couches filtrantes (11) en un matériau non tissé, et présente au moins une seconde feuille de couches filtrantes (12) en un matériau non tissé, dans lequel la seconde feuille de couches filtrantes (12) est agencée de manière adjacente sur la première feuille de couches filtrantes (11), dans lequel le système de couches filtrantes (2) est réalisé en tant que manchon filtrant (3) présentant la forme d'un corps creux oblong, dans lequel le manchon filtrant (3) est réalisé avec une couture longitudinale (6) qui relie au moins la première feuille de couches filtrantes (11) dans le sens périphérique, dans lequel la couture longitudinale (6) relie ensemble toutes les feuilles de couches filtrantes (11, 12) du système de couches filtrantes (2).

12. **Procédé destiné à la fabrication** d'un séparateur à coalescence (50) selon l'une quelconque des revendications 7 ou 8, qui présente un élément filtrant (1) selon la revendication 1, dans lequel au moins deux des feuilles de couches filtrantes (11, 12, 13, 14, 15) sont posées successivement sur le corps de support (52), dans lequel l'élément filtrant (1) présente un système de couches filtrantes (2) qui présente au moins une première feuille de couches filtrantes (11) en un matériau non tissé, et présente au moins une seconde feuille de couches filtrantes (12) en un matériau non tissé, dans lequel la seconde feuille de couches filtrantes (12) est agencée de manière adjacente sur la première feuille de couches filtrantes (11), dans lequel le système de couches filtrantes (2) est réalisé en tant que manchon filtrant (3) présentant la forme d'un corps creux oblong, dans lequel le manchon filtrant (3) est réalisé avec une couture longitudinale (6) qui relie au moins la première feuille de couches filtrantes (11) dans le sens périphérique, dans lequel la couture longitudinale (6) relie ensemble toutes les feuilles de couches filtrantes (11, 12) du système de couches filtrantes (2).
